# EUROPÄISCHE PATENTANMELDUNG

(11) **EP 2 156 874 A1**
(43) Veröffentlichungstag der Anmeldung: **24.02.2010**
(21) Anmeldenummer: 09009297.4
(22) Anmeldetag: 16.07.2009
(51) Int. Cl.: B01D 27/14, B01D 29/11

(54) **Filtervorrichtung**

(30) Priorität: 21.08.2008 DE 102008038602
(71) Anmelder: IBS Filtran Kunststoff-/Metallerzeugnisse GmbH, 51597 Morsbach (DE)
(72) Erfinder: Stausberg, Wolfgang, 51597 Morsbach (DE)
(74) Vertreter: Lang, Friedrich

(57) **Zusammenfassung**

Die Erfindung betrifft eine Filtervorrichtung zur Filterung von Fluid, insbesondere ein Ölfilter, wobei die Filtervorrichtung ein erstes Filtermedium und ein zweites Filtermedium aufweist, wobei das erste Filtermedium eine höhere Filterwirkung als das zweite Filtermedium besitzt, und die Filtermedien in plissierter Form gefaltet sind und eine Vielzahl von Falten aufweisen, wobei das erste Filtermedium und das zweite Filtermedium in Längsrichtung der Falten miteinander verbunden sind. Damit wird eine einfach herstellbare und hochwirksame Filtervorrichtung erzielt.

## Beschreibung

Die Erfindung betrifft eine Filtervorrichtung zur Filterung von Fluid, insbesondere einen Ölfilter, wobei die Filtervorrichtung ein erstes Filtermedium und ein zweites Filtermedium aufweist, wobei das erste Filtermedium eine andere Filtercharakteristik, beispielsweise eine höhere Filterwirkung, als das zweite Filtermedium besitzt, und die Filtermedien in plissierter Form gefaltet sind.

Bei Motorgetrieben werden im Hinblick auf Leistungsfähigkeit, Schaltkomfort und Umweltverträglichkeit immer höhere Anforderungen gestellt. Dies gilt zum Beispiel bei einem stufenlosen Getriebe oder Doppelkupplungsgetriebe. Es handelt sich hierbei um ein automatisiertes Schaltgetriebe, das mittels zweier Teilgetriebe einen vollautomatischen Gangwechsel ohne Zugkraftunterbrechung ermöglicht. In einem derartigen Getriebe kann bei Motoren mit hohem Drehmoment eine nasslaufende Kupplung verwendet werden. Die beim Schaltvorgang und Anfahren entstehende Verlustwärme wird über einen Kühlölstrom abgeführt. Als Ölsumpf wird üblicherweise das Getriebe selbst verwendet. Das Öl dient somit sowohl zur Kühlung der Kupplung als auch zur Schmierung des Radsatzes. Voraussetzung für einen störungsfreien Betrieb ist eine hohe Reinheit des verwendeten Öls.

Zur Steigerung der Ölreinheit kommen Saugölfilter und Druckölfilter zum Einsatz. Die derzeit verfügbaren Filter funktionieren gut und zuverlässig, jedoch ist der Fertigungsaufwand zum Beispiel bei einem Druckölfilter mit mehreren Filtermedien oft recht hoch. Ferner ist es wünschenswert, wenn das Gewicht eines derartigen Druckölfilters weiter reduziert werden kann, ohne dabei Einbußen bei der erzielbaren Ölreinheit hinnehmen zu müssen. Im Hinblick auf eine einfache Wiederverwertung sollte der Druckölfilter einfach aufgebaut und recycelfähig sein.

Es ist eine Aufgabe der Erfindung, eine Filtervorrichtung zur Filterung von Fluid zu schaffen, mit der eine hohe Ölreinheit erzielbar ist, wobei die Filtervorrichtung ein geringes Gewicht aufweist, einfach zu fertigen ist, wenig Platz beansprucht und recycelfähig ist.

Die Aufgabe wird durch eine Filtervorrichtung gemäß dem Gegenstand des unabhängigen Patentanspruches gelöst. Vorteilhafte Weiterbildungen der Erfindung sind Gegenstand der Unteransprüche.

Die erfindungsgemäße Filtervorrichtung zur Filterung von Fluid, insbesondere ein Ölfilter, weist mindestens ein erstes Filtermedium und ein zweites Filtermedium auf, wobei das erste Filtermedium eine andere Filtercharakteristik, beispielsweise eine höhere Filterwirkung, als das zweite Filtermedium besitzt, und die Filtermedien in plissierter Form gefaltet sind und eine Vielzahl von Falten aufweisen, wobei das erste Filtermedium und das zweite Filtermedium in Längsrichtung der Falten miteinander verbunden sind.

Durch die plissierte Ausführung und die zwei unterschiedlichen Filtermedien kann eine hohe Ölreinheit auf kleinem Raum erzielt werden. Die Verbindung der Filtermedien in Längsrichtung erfordert nur wenige oder keine zusätzlichen Bauteile, so dass das Gewicht und der Platzbedarf gering gehalten werden können. Ein Verbinden der Filtermedien in Längsrichtung der Falten ist einfach herstellbar. Die unterschiedlichen Eigenschaften der Filtermedien wie zum Beispiel Fließwiderstand und Abreinigungsfähigkeit lassen sich auf diese Weise in einer einzigen Filtervorrichtung gut miteinander kombinieren.

Die Filtervorrichtung ist derart ausgebildet ist, dass das durch eine Einströmöffnung einströmende Fluid zuerst auf das erste Filtermedium trifft, welches eine höhere Filterwirkung als das zweite Filtermedium aufweist, so dass ein erster Teil des Fluides das erste Filtermedium durchströmt und ein zweiter, wesentlich größerer Teil des Fluides das erste Filtermedium umströmt, um das zweite Filtermedium zu durchströmen, so dass ein homogenes Durchströmen der Filtervorrichtung ermöglicht wird. Dadurch wird erreicht, dass der Druckabfall, der durch den Gesamtfließwiderstand der Filtermedien hervorgerufen wird, geringer ist als bei einer Filtervorrichtung, in der ausschließlich ein erstes Filtermedium mit hoher Filterwirkung enthalten ist. Gleichzeitig erfolgt aber aufgrund der Durchströmung des ersten Filtermediums, welches von dem einströmenden Öl zu einem großen Anteil zuerst erreicht wird, relativ schnell eine gute Abreinigung des Öls.

Vorzugsweise ist die Einströmöffnung derart angeordnet ist, dass der kürzeste Strömungspfad des Fluides von der Einströmöffnung zu einer Ausströmöffnung der Filtervorrichtung durch das erste Filtermedium verläuft. Dies führt zwangsläufig dazu, dass das Fluid zuerst auf das dichtere, erste Filtermedium trifft.

In einer weiteren vorteilhaften Ausführungsform schließt die Längsachse einer Einströmstrecke, welche sich der Einströmöffnung anschließt, mit der Längsachse der Filtervorrichtung einen spitzen Winkel α zwischen 10° und 80°, vorzugsweise zwischen 30° und 60°, ein. Dadurch wird ebenfalls eine günstige Strömungsführung erreicht.

Ferner können die miteinander verbundenen Filtermedien an ihren Stirnseiten mit Endkappen verbunden sein, wobei eine erste Endkappe fluiddicht ist und eine zweite Endkappe eine Öffnung zum Ausströmen gereinigten Fluids aufweist. Die fluiddichte Endkappe ermöglicht eine einfache Montage mit den Filtermedien, wobei im Zusammenhang mit der zweiten Endkappe die Fluidströmung auf einfache Weise ausgerichtet wird. Ferner sind nur zwei Endkappen erforderlich, obwohl zwei unterschiedliche Filtermedien zum Einsatz kommen. Eine Bauart, bei der jedes Filtermedium für sich zwischen zwei Endkappen platziert wird und seriell einige Filtermedien in einer Filtervorrichtung angeordnet sind, so dass eine kaskadenförmige Abreinigung erzielt wird, wobei zusätzlich ein hoher Fertigungsaufwand besteht und ein relativ hohes Gewicht erzielt wird, kann durch die erfindungsgemäße Filtervorrichtung vermieden werden.

Vorzugsweise sind das erste Filtermedium und das zweite Filtermedium in Längsrichtung der Falten durch Clipse, Ultraschallschweißen oder Kleben miteinander verbunden. Dies ist fertigungstechnisch einfach realisierbar und mit fast keinem zusätzlichen Gewicht verbunden. Eine hohe Abreinigung wird erzielt, wenn das erste Filtermedium ein Feinstfiltermedium und das zweite Filtermedium ein Feinfiltermedium ist. Der einströmende Ölstrom fließt somit zuerst auf das Feinstfiltermedium, welches eine hohe Abreinigung ermöglicht, während das umströmende Öl auf den Feinfilter trifft.

Eine einfache Fertigung der Filtervorrichtung ist auch dadurch gegeben, wenn die miteinander verbundenen Filtermedien einen Filterstern bilden. Damit ist der verfügbare Platz bei maximal möglicher Filterfläche gut genutzt.

Nachfolgend wird die Erfindung anhand eines in der Zeichnung dargestellten Ausführungsbeispiels weiter beschrieben. Es zeigen:
- Fig. 1: eine Seitenansicht eines Filtersterns für eine erfindungsgemäße Filtervorrichtung;
- Fig. 2: eine perspektivische Darstellung des Filtersterns gemäß Fig. 1; und
- Fig. 3: eine Querschnittsansicht einer Ausführungsform der erfindungsgemäßen Filtervorrichtung.

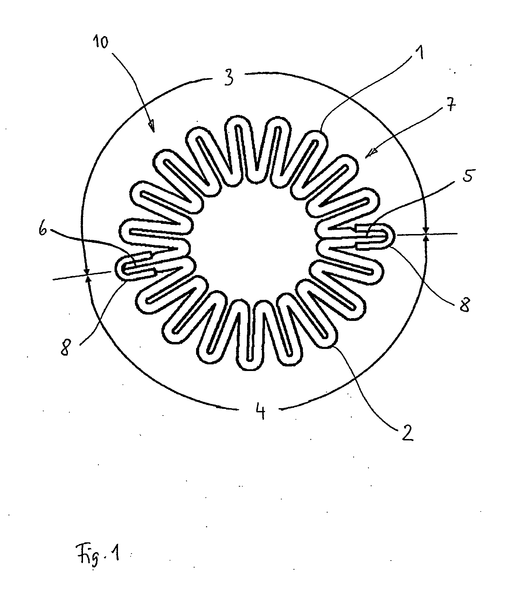

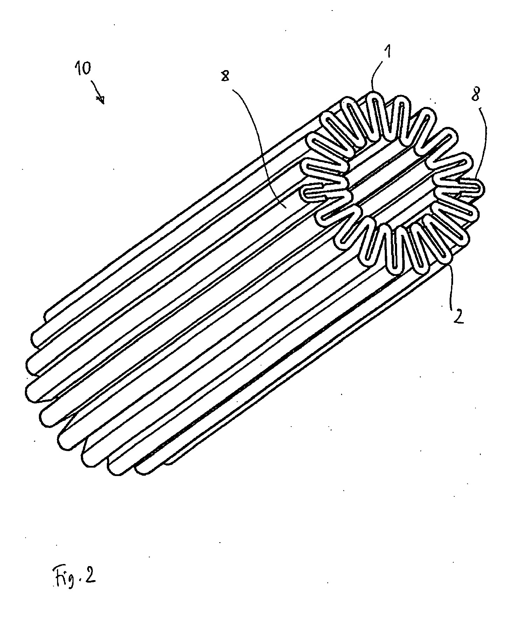

In Fig. 1 ist eine Seitenansicht und in Fig. 2 eine perspektivische Ansicht eines Filtersterns 10 für eine erfindungsgemäße Filtervorrichtung 100 dargestellt. Der Filterstern 10 weist ein erstes Filtermedium 1 und ein zweites Filtermedium 2 auf, wobei das erste Filtermedium 1 eine höhere Filterwirkung besitzt als das zweite Filtermedium. Das erste Filtermedium 1 und das zweite Filtermedium 2 sind jeweils in plissierter Form ausgeführt und weisen eine Vielzahl von Falten 7 auf. Die plissierte Form des Filtermediums 1 ist bei dem in Fig. 1 dargestellten Filterstern etwa in Form eines Halbkreises 3 angeordnet, wobei in analoger Weise das Filtermedium 2 ebenfalls ungefähr einen Halbkreis 4 ausbildet. Die Filtermedien 1 und 2 berühren sich einander an Flächen 5 und 6, die in Längsrichtung der Falten 7 ausgebildet sind. An diesen Berührflächen 5 und 6 erfolgt eine Verbindung der Filtermedien miteinander. Die Verbindung kann zum Beispiel durch Klemmeelemente (Clipse) 8, durch Klebstoff oder durch Ultraschallschweißen erfolgen. Derart verbundene Filtermedien 1 und 2, die beide jeweils einen Halbkreis 3 und 4 ausbilden, ergeben auf diese Weise einen Vollkreis. In der Seitenansicht bilden die Filtermedien 1 und 2 somit eine sternförmige Anordnung, welche man somit als Filterstern bezeichnen kann.

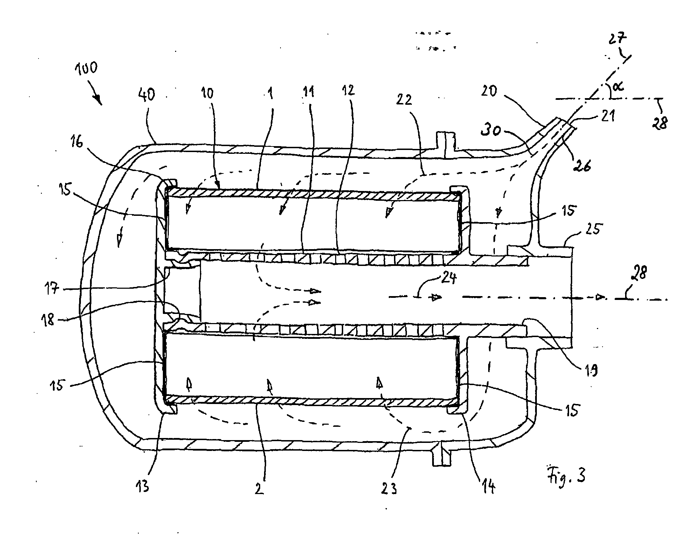

In Fig. 3 ist eine Querschnittsansicht einer Ausführungsform einer Filtervorrichtung 100 mit einem zuvor beschriebenen Filterstern 10 dargestellt. Der Filterstern 10 ist um einen Hohlzylinder 11 angeordnet, der mit Durchtrittsöffnungen 12 für ein zu filterndes Fluid versehen ist. An den Stirnseiten des Filtersterns 10 ist eine erste Endkappe 13 und eine zweite Endkappe 14 angeordnet. Der Hohlzylinder 11 und die Endkappen 13 und 14 bewirken unter anderem, dass der Filterstern 10 innerhalb der Filtervorrichtung in einer vorbestimmten Lage gehalten wird. Vorzugsweise ist der Filterstern 10 an Klebestellen 15 mit den Endkappen 13 und 14 verbunden. Die Klebestellen 15 können sowohl an den Stirnseiten des Filtersterns 10 als auch teilweise am Umfang des Filtersterns 10 angeordnet sein, siehe Bezugszeichen 16.

Bei der in Fig. 3 dargestellten Ausführungsform der Filtervorrichtung ist der Hohlzylinder 11 an einem Ende mit der zweiten Endkappe 14 einstückig ausgebildet ist. Durch die einstückige bzw. integrale Ausführung können Arbeitsschritte eingespart und Herstellungskosten gesenkt werden. Bei der Montage kann der Filterstern 10 somit über den Hohlzylinder 11 aufgeschoben werden, bis er an der zweiten Endkappe 14 zur Anlage kommt. Anschließend kann an dem gegenüberliegenden Ende des Hohlzylinders 11 die erste Endkappe 13 aufgesteckt werden, wobei bei der in Fig. 3 dargestellten Ausführungsform die erste Endkappe 13 im Mittenbereich eine Aufnahme 17 aufweist, in welche der Hohlzylinder 11 zum Beispiel mittels einer Schnappverbindung 18 einrasten kann.

Der Hohlzylinder 11, der mit der zweiten Endkappe 14 einstückig ausgebildet ist, kann auf der gegenüberliegenden Seite aus der Endkappe 14 herausgeführt sein und einen zylindrischen Montagestutzen 19 bilden, der mit einer Filterkappe 20 verbunden ist. Die Filterkappe 20 ist mit einem Filtergehäuse 40 verbunden, welches den Filterstern 10, die erste Endkappe 13 und die zweite Endkappe 14 umschließt.

Die erste Endkappe 13 kann mit einem Überdruckventil versehen sein, das dazu dient, einen Überdruck, der beispielsweise durch kaltes Öl und der damit verbundenen hohen Viskosität entsteht, anzuleiten, damit der Filterkörper nicht beschädigt wird.

Die Filterkappe 20 weist eine Einströmöffnung 21 auf, durch welche Fluid 30 in die Filtervorrichtung 100 einströmen kann. Das Fluid 30 strömt dabei zunächst durch eine kanalartige Einströmstrecke 26 zum ersten Filtermedium 1, siehe gestrichelte Linien und Pfeil 22, und entlang eines längeren Strömungspfades zum zweiten Filtermedium 2, siehe Pfeil 23. Dabei bilden die Längsachse 27 der Einströmstrecke 26 und die Längsachse 28 der Filtervorrichtung 100 einen spitzen Winkel α, welcher zwischen 10° und 80°, vorzugsweise zwischen 30° und 60°, beträgt. Das Fluid 30 durchströmt die Filtermedien 1 und 2 und gelangt zu dem Hohlzylinder 11, wobei es die Durchtrittsöffnungen 12 passiert und in das Innere des Hohlzylinders 11 eindringt. Da die erste Endkappe 13 fluiddicht ist, strömt das Fluid in Richtung zur zweiten Endkappe 14, siehe Pfeil 24, und von dort zum Montagestutzen 19. Dort gelangt es zur Ausströmöffnung 25 der Filterkappe 20 und kann die Filtervorrichtung verlassen.

Da das erste Filtermedium 1 eine höhere Filterwirkung als das zweite Filtermedium 2 aufweist, dringt das Fluid somit zuerst durch ein relativ dichtes Filtermedium, wodurch eine gute Abreinigung erzielt wird. Da ein Teilstrom auch zum weniger dichten zweiten Filtermedium 2 gelangt, ist der Gesamtfließwiderstand geringer als bei einer Filtervorrichtung, in der nur ein sehr dichtes Filtermedium enthalten ist.

Vorteilhaft ist bei der erfindungsgemäßen Filtervorrichtung ferner, dass trotz nur einer ersten Endkappe 13 und einer zweiten Endkappe 14 mit zugehörigen Klebestellen 15 zwei unterschiedliche Filtermedien in der Filtervorrichtung untergebracht werden können. Durch die Verbindung der Filtermedien entlang der Längsrichtung der Falten entsteht ein Filterstern, der genauso einfach auf den Hohlzylinder aufgesetzt werden kann wie ein Filterstern, der nur aus einem einzigen Filtermedium zusammengesetzt ist. Bei der erfindungsgemäßen Filtervorrichtung mit den zwei unterschiedlichen Filtermedien wird jedoch eine höhere Abreinigung erzielt, als wenn nur ein zweites Filtermedium vorhanden wäre. Jedoch ist ein geringerer Druckabfall in der Filtervorrichtung vorhanden, als wenn nur ein erstes Filtermedium in der Filtervorrichtung enthalten wäre.

Als Weiterbildung des vorstehend beschriebenen Beispiels können mehr als zwei Filtermedien mit unterschiedlichen Filtercharakteristika zu einem Filterstern zusammengefügt sein.

## Patentansprüche

1. Filtervorrichtung (100) zur Filterung von Fluid (30), insbesondere ein Ölfilter, wobei die Filtervorrichtung (100) ein mindestens erstes Filtermedium (1) und ein zweites Filtermedium (2) aufweist, wobei das erste Filtermedium (1) eine andere Filtercharakteristik als das zweite Filtermedium (2) besitzt, und die Filtermedien (1, 2) in plissierter Form gefaltet sind und eine Vielzahl von Falten (7) aufweisen, und wobei das erste Filtermedium (1) und das zweite Filtermedium (2) in Längsrichtung der Falten (7) miteinander verbunden sind,
**dadurch gekennzeichnet,**
**dass** die Filtervorrichtung (100) derart ausgebildet ist, dass das durch eine Einströmöffnung (21) einströmende Fluid (30) zuerst auf das erste Filtermedium (1) trifft, welches eine höhere Filterwirkung als das zweite Filtermedium (2) aufweist, so dass ein erster Teil des Fluides (30) das erste Filtermedium (1) durchströmt und ein zweiter, wesentlich größerer Teil des Fluides (30) das erste Filtermedium (1) umströmt, um das zweite Filtermedium (2) zu durchströmen, so dass ein homogenes Durchströmen der Filtervorrichtung (100) ermöglicht wird.

2. Filtervorrichtung (100) nach Anspruch 1,
**dadurch gekennzeichnet,**
**dass** die Einströmöffnung (21) derart angeordnet ist, dass der kürzeste Strömungspfad des Fluides (30) von der Einströmöffnung (21) zu einer Ausströmöffnung (25) der Filtervorrichtung (100) durch das erste Filtermedium (1) verläuft.

3. Filtervorrichtung (100) nach einem der vorhergehenden Ansprüche,
**dadurch gekennzeichnet,**
**dass** die Längsachse (27) einer Einströmstrecke (26), welche sich der Einströmöffnung (21) anschließt, mit der Längsachse (28) der Filtervorrichtung (100) einen spitzen Winkel α zwischen 10° und 80°, vorzugsweise zwischen 30° und 60°, einschließt.

4. Filtervorrichtung (100) nach einem der vorhergehenden Ansprüche,
**dadurch gekennzeichnet,**
**dass** die miteinander verbundenen Filtermedien (1, 2) an ihren Stirnseiten mit Endkappen (13, 14) verbunden sind, wobei eine erste Endkappe (13) fluiddicht ist und eine zweite Endkappe (14) eine Öffnung zum Ausströmen gereinigten Fluids (30) aufweist.

5. Filtervorrichtung (100) nach Anspruch 4,
**dadurch gekennzeichnet,**
**dass** die Filtervorrichtung (100) einen mit Durchtrittsöffnungen (12) versehenen Hohlzylinder (11) aufweist, auf dessen Mantelfläche die Filtermedien (1, 2) angeordnet sind, wobei der Hohlzylinder (11) integral mit der zweiten Endkappe (14) ausgebildet ist.

6. Filtervorrichtung (100) nach einem der vorhergehenden Ansprüche,
**dadurch gekennzeichnet,**
**dass** das erste Filtermedium (1) und das zweite Filtermedium (2) in Längsrichtung der Falten (7) durch Clipse, Ultraschallschweißen oder Kleben miteinander verbunden sind.

7. Filtervorrichtung (100) nach einem der vorhergehenden Ansprüche,
**dadurch gekennzeichnet,**
**dass** das erste Filtermedium (1) ein Feinstfiltermedium und das zweite Filtermedium (2) ein Feinfiltermedium ist.

8. Filtervorrichtung (100) nach einem der vorhergehenden Ansprüche,
**dadurch gekennzeichnet,**
**dass** die miteinander verbundenen Filtermedien (1, 2) einen Filterstern (10) bilden.
